# EUROPÄISCHE PATENTSCHRIFT

(11) **EP 3 767 139 B1**
(45) Veröffentlichungstag und Bekanntmachung des Hinweises auf die Patenterteilung: **11.09.2024**
(21) Anmeldenummer: 20184850.4
(22) Anmeldetag: 09.07.2020
(51) Int. Cl.: F16K 11/07

(54) **VENTILKOLBEN UND VENTIL MIT DEM VENTILKOLBEN**
VALVE PISTON AND VALVE WITH THE VALVE PISTON
PISTON DE SOUPAPE ET SOUPAPE DOTÉE D'UN PISTON DE SOUPAPE

(30) Priorität: 16.07.2019 DE 102019210488
(43) Veröffentlichungstag der Anmeldung: 20.01.2021
(73) Patentinhaber: Robert Bosch GmbH, 70442 Stuttgart (DE)
(72) Erfinder: Gruebel, Marco, 97845 Neustadt (DE); Schueler, Mark-Simon, 97816 Lohr am Main (DE); Gehrling, Andreas, 97816 Lohr (DE); Olschyna, Siegfried, 97833 Frammersbach (DE); Neubauer, Steffi, 97070 Wuerzburg (DE); Amrhein, Bertram, 63879 Weibersbrunn (DE); Cesinger, Michael, 97816 Lohr am Main (DE); Schreier, Daniel, 97833 Frammersbach (DE); Muecke, Rene, 97289 Thuengen (DE); Wolff, Mathias, 97854 Steinfeld (DE)

(56) Entgegenhaltungen:
- WO-A1-2018/077659
- US-A1- 2007 056 645
- US-A1- 2016 290 368
- US-A1- 2019 024 806

## Beschreibung

Die Erfindung betrifft einen Ventilkolben gemäß dem Oberbegriff des Patentanspruchs 1, sowie ein Ventil mit dem Ventilkolben gemäß Patentanspruch 14.

Ein Ventil, insbesondere ein Wegeventil, steuert eine oder mehrere Druckmittelverbindungen zwischen unterschiedlichen Druckniveaus und einem Verbraucher. Dabei bietet sich die Bauart als Schieberventil an, um eine Vielfalt möglicher Druckmittelverbindungen darstellen zu können. Ein solches hat ein Ventilgehäuse, in dem ein Ventilkolben in Abhängigkeit des Typs (Längsschieber- oder Drehschieberventil) axial oder rotatorisch verschieblich aufgenommen ist. Am Ventilkolben sind Steuergeometrien, beispielsweise in Ausgestaltung von radial erweiterten Steuerbünden mit Steuerkanten vorgesehen, die mit entsprechenden Steuergeometrien des Ventilgehäuses zusammenwirken und so eine Drosselstelle für die jeweilige Druckmittelverbindung ausbilden. Zwischen den Steuergeometrien des Ventilgehäuses sind im Ventilgehäuse Druckräume ausgebildet, die jeweils mit einem anderen Druckniveau oder mit einem Verbraucheranschluss des Ventils verbunden sind. In Abhängigkeit der Verstellung des Ventilkolbens und der daraus resultierenden Stellung der Steuergeometrien zueinander, werden die Druckmittelverbindungen auf-, bzw. zugesteuert oder angedrosselt.

Für bestimmte Schaltlogiken des Ventils muss dessen Ventilkolben innenliegende Kanäle aufweisen, über die, eine bestimmte Ventilkolbenstellung vorausgesetzt, einer der Druckräume unter Umgehung der Steuergeometrien mit einem anderen der Druckräume dauerhaft verbunden oder verbindbar ist. Dies ist beispielsweise für einen Betrieb von Open-Center-Pumpen notwendig, bei denen Pumpe in einer Neutralstellung und geschlossenen Arbeitsanschlüssen die im Bypass Druckmittel im Umlauf fördern können muss.

Gemäß dem Stand der Technik, wie beispielsweise das Datenblatt RD23340 der Anmelderin zeigt, sind solche Ventilkolben herkömmlich aus mehreren, spanend hergestellten Elementen gefertigt, welche mit Fügeverfahren, wie beispielsweise Löten, zu einem resultierenden Ventilkolben verbunden sind. Insbesondere wird dazu ein gedrehter Bolzen, der radial verjüngte Abschnitte hat, in eine als Frästeil ausgeführte Hülse mit Lot gefügt. Die radialen Verjüngungen stellen dann zusammen mit der Hülse und deren Radialbohrungen die genannten innenliegenden Kanäle dar.

Nachteilig an derartigen Lösungen ist, dass im Prinzip drei Bauteile, der Bolzen, die Hülse und das Lot vorzusehen, einzeln gefertigt und gefügt werden müssen. Derart gefertigte Kolben machen somit eine aufwändige und lange Prozesskette notwendig, in der aufgrund komplexer Montage- und Fügeschritte Prüfschritte erforderlich sind, um die erzeugten Fügeverbindungen bezüglich Festigkeit und Druckmitteldichtheit abzusichern. Dies ist besonders wichtig, da in den innenliegenden Kanälen Maximaldruck des Hydrauliksystems mit mehreren hundert bar und am äußeren Endabschnitt des Kolbens immer Tank- oder Umgebungsdruck anstehen kann. Entsprechend wirken auf die Fügestellen erhebliche Kräfte. Weiterhin nachteilig ist, dass aufgrund der beschriebenen Fertigung die innenliegenden Kanäle kaum strömungsgünstig optimierbar sind und einen vergleichsweise hohen Druckverlust aufweisen können. Da dieser durch mehr Pumpenleistung ausgeglichen werden muss, senkt dies die Energieeffizienz. Das Dokument US 2019/024806 A1 offenbart einen Ventilkolben nach dem Oberbegriff des Anspruchs 1.

Die Druckschrift WO 2018/077659 A1 zeigt einen Ventilkolben, dessen innenliegenden Kanäle mittels Schrägbohrungen gefertigt sind, wobei sich die Bohrungen bis über die Mittelachse des Ventilkolbens erstrecken und kreuzen, sodass unter Umgehung von Steuergeometrien eine Druckmittelverbindung durch das Innere des Ventilkolbens ausbildbar ist.

Bezüglich des Fertigungsaufwandes variabler und günstiger erweist sich die additive Fertigung eines solch hohlen Ventilkolbens. So zeigt beispielsweise die Firma aidro unter https://www.aidro.if/3d-printed-solutions.html einen einteiligen Hohlkolben "hydraulic spool" mit einem innenliegenden, mittigen Kanal.

Nachteilig an der gezeigten Lösung ist, dass der innenliegende Kanal derart geformt ist, dass die Druckmittelströmung Totbereiche aufweist, sodass großräumige Verwirbelungen der Druckmittelströmung möglich sind. Es können sich daher nach wie vor vergleichsweise ungünstige Strömungsverhältnisse einstellen und das Risiko eines hohen Druckverlustes besteht weiterhin.

Demgegenüber liegt der Erfindung die Aufgabe zugrunde, einen Ventilkolben mit innenliegendem Druckmittelkanal mit verbesserter oder zumindest besser beeinflussbarer Druckmittelströmung zu schaffen. Des Weiteren liegt der Erfindung die Aufgabe zugrunde, ein Ventil mit verringertem Druckverlust im innenliegenden Druckmittelkanal zu schaffen.

Die erste Aufgabe wird gelöst durch einen Ventilkolben mit den Merkmalen des Patentanspruchs 1, die zweite durch ein Ventil mit den Merkmalen des Patentanspruchs 14.

Vorteilhafte Weiterbildungen der jeweiligen Erfindung sind in den jeweils abhängigen Patentansprüchen beschrieben.

Ein Ventilkolben, insbesondere ein Schieberventilkolben für ein entsprechendes Schieberventil, insbesondere Wegeventil, hat eine Mittelachse, entlang der, insbesondere zur Steuerung einer Druckmittelverbindung zwischen zwei Druckräumen des Ventils, zueinander beabstandete Steuergeometrien vorgesehen sind. Diese sind insbesondere von oder an, insbesondere radial erweiterten, Steuerbünden gebildet. Eine Steuergeometrie ist dabei eine Steuerfläche oder Steuerkante und kann beispielsweise, insbesondere zur Verbesserung einer Steuerbarkeit der Druckmittelverbindung, mit Steuerkerben versehen sein. Die genannten, beabstandeten Steuergeometrien sind dabei von einem den Ventilkolben durchsetzenden, zumindest abschnittsweise additiv gefertigten, von Druckmittel durchströmbaren Durchgang umgangen und erfindungsgemäß ist der Durchgang hin zur Mittelachse begrenzt, erstreckt sich also nicht als einfacher, mittiger Durchgang im Ventilkolben, sonders radial beabstandet zur Mittelachse. Der Ventilkolben hat eine Außenmantelfläche, in der erfindungsgemäß diesseits einer ersten und jenseits einer zweiten der Steuergeometrien des Ventilkolbens Mündungen des Durchgangs vorgesehen sind. Die Mündungen können dabei als Bohrungen ausgebildet sein. Alternativ können sie additiv gefertigt sein. Zur weiteren Verbesserung eines Strömungsein- und -auslaufs können sie spanend bearbeitet sein.

Durch die Begrenzung hin zur Mittelachse weist der Durchgang, verglichen zum additiv gefertigten Durchgang gemäß dem Stand der Technik, eine verbesserte Druckmittelströmung auf oder diese ist zumindest besser beeinflussbar. Dies zumindest insofern, dass die Druckmittelströmung nicht nur durch eine gezielte Ausgestaltung des Durchgangs radial außen, sondern auch an seiner radial innenliegenden Begrenzung hin zur Mittelachse, insbesondere bezüglich eines Druckverlustes des Durchgangs, optimierbar ist. In einer Weiterbildung ist der Durchgang zumindest hin zur Mittelachse strömungsoptimiert begrenzt, insbesondere im Hinblick auf einen minimalen Druckverlust.

Vorzugsweise ist der Durchgang nicht nur abschnittsweise, sondern vollständig strömungsoptimiert, insbesondere mit Hinblick auf den minimalen Druckverlust.

In einer Weiterbildung ist der Durchgang derart strömungsoptimiert, dass ein Geschwindigkeitsprofil der Druckmittelströmung des Durchgangs zumindest abschnittsweise konstant ist. Hierzu ist der Querschnitt entlang dem Durchgang insbesondere variabel ausgestaltet.

Vorzugsweise sind die Mündungen umfänglich verteilt, insbesondere gleichverteilt, angeordnet.

Über die Mittelachse ist vorzugsweise eine Hubrichtung definiert. Im Fall eines Drehkolbens ist die Mittelachse eine Drehachse für einen Drehhub, im Falle eines Axialkolbens ist die Mittelachse eine Hubachse für einen Axialhub.

Vorzugsweise ist der Ventilkolben, nicht nur der Durchgang, abschnittsweise oder vollständig additiv gefertigt.

Die additive Fertigung, insbesondere des Durchgangs, macht die aufwändigen Prüfschritte, insbesondere der Dichtigkeit, aufgrund der aus der additiven Fertigung resultierenden Einstückigkeit und entfallender Fügestellen überflüssig.

Die additive Fertigung ermöglicht auf wenig aufwändige Weise ein maximal strömungsoptimiertes Design des Durchgangs, sowie des ganzen Ventilkolbens. Dem Design sind dabei bedeutend weniger Grenzen gesetzt, als mit herkömmlicher Fertigung.

Das Halbzeug kann beispielsweise spanend oder urgeformt gefertigt sein.

Um den Fertigungsprozess zu beschleunigen und zu optimieren, kann in einer Weiterbildung der Ventilkolben mit wenigstens einem eingelegten Halbzeug additiv gefertigt sein. So kann zumindest ein Abschnitt des Ventilkolbens mittels einem gegenüber der kostenintensiven additiven Fertigung kostengünstigeren Verfahren gefertigt sein.

Das Halbzeug ist in einer bevorzugten Weiterbildung an einem Endabschnitt des Ventilkolbens angesetzt, so kann dieser ohne Trennverfahren von seiner Bauplatte abgenommen werden. Dann entfällt auch ein Ab- oder Flachschleifen der Bauplatte für die Fertigung des nächsten Bauteils oder Ventilkolbens. So unterliegt die Bauplatte keinem nennenswerten Verschleiß oder Abtrag.

Der Endabschnitt ist insbesondere ein Federzapfen des Ventilkolbens, an dem eine Abstütz- oder Zentrierfeder führbar oder geführt ist.

Die additive Fertigung erfolgt vorzugsweise mittels pulverbettbasiertem selektiven Laserstrahlschmelzens. Das bevorzugte Material ist ein mit diesem Verfahren verarbeitbarer Stahl.

Das Material für das pulverbettbasierte selektive Laserstrahlschmelzen, also die additive Fertigung, und das Material des Halbzeugs oder Einlegeteils, sind so gewählt, dass sie mittels dem Laserstrahl verschweißbar sind. Vorzugsweise sind sie gleich, sodass überall am Ventilkolben die materialbedingt gleichen Festigkeitswerte angenommen vorliegen oder werden können.

Das Halbzeug ist in einer Weiterbildung additiv gefügt, indem es ans additiv aufgeschmolzene Material angesetzt und damit verschmolzen ist. Oder es ist geklebt, geschweißt oder gelötet gefügt.

In einer bevorzugten Weiterbildung hat der Durchgang zumindest einen Abschnitt, der hin zur Mittelachse gewölbt ist. In anderen Worten ist er bauchig oder mit bauchiger Form hin zur Mittelachse eingewölbt. Diese Form weist ein strömungsgünstigeres Verhalten auf, als beispielsweise die aus dem Stand der Technik bekannte lineare Form mit großem Totraumgebiet.

Die gewölbte oder bauchige Form hin zur Mittelachse kann beispielsweise hyperbelartig ausgebildet sein. Der Begriff hyperbelartig umfasst im Sinne der vorgestellten Lösung sowohl eine streng mathematische Hyperbel, darüber hinaus aber auch andere, ähnlich gewölbte oder bauchige Formen. Die Form kann beispielsweise alternativ oder ergänzend aus einer Regelgeometrie wie einer Parabel, einer Ellipse, oder einem Kreis abgeleitet sein, wobei Mischformen und/oder aufeinanderfolgende Abschnitte unterschiedlicher Form möglich sind.

Alternativ oder ergänzend kann die gewölbte oder bauchige Form, insbesondere eine Innenmantelfläche oder Innenmantelflächen des Durchgangs, von einer Freiformgeometrie, also von einer Freiformfläche gebildet sein. Diese weist dann die genannte bauchige Form auf, lässt sich jedoch nicht auf eine Regelgeometrie zurückführen.

In einer bevorzugten Weiterbildung ist der genannte Abschnitt mit hin zur Mittelachse gewölbter oder bauchiger Form ein Mittelabschnitt des Durchgangs. Der Mittelabschnitt ist dabei zwischen wenigstens einer eingehenden und wenigstens einer ausgehenden Mündung des Durchgangs angeordnet.

In einer möglichen Weiterbildung weist der Durchgang, insbesondere sein Mittelabschnitt, eine Schar Druckmittelkanäle auf oder ist von diesen gebildet. Die Druckmittelkanäle sind dabei insbesondere umfänglich gleichverteilt angeordnet. Dabei kann die Schar vollumfänglich oder teilumfänglich ausgebildet sein.

In einer Weiterbildung erstreckt sich die Schar innerhalb eines Hüllvolumens, das eine hin zur Mittelachse gewölbte oder bauchige, insbesondere hyperboloid-artige Form aufweist. Das genannte Hüllvolumen ist als Hilfsgeometrie zur Veranschaulichung der Form zu verstehen, innerhalb der sich die Schar erstreckt, also nicht als physisch greifbares Merkmal.

Auf den Begriff "hyperboloid-artig" treffen im Sinne der Lösung die gleichen Betrachtungen wie auf den Begriff "hyperbel-artig" zu.

In einer Weiterbildung sind zur Strömungsoptimierung Querschnitte der Druckmittelkanäle entlang der Mittelachse variabel, sie weisen also in ihrer Erstreckungsrichtung einen variablen Querschnitt, insbesondere zur Strömungsoptimierung auf.

In einer Weiterbildung, ergänzend oder alternativ zur genannten Schar, weist der Durchgang, insbesondere sein Mittelabschnitt, einen Sammelkanal mit einem Ringquerschnitt oder mit einem Ringabschnitt-Querschnitt auf. In anderen Worten ist der Sammelkanal als Ringraum oder Ringkanal ausgebildet.

In einer Weiterbildung ist der Sammelkanal hin zur Mittelachse gewölbt oder bauchig, insbesondere hyperboloid-artig ausgebildet, insbesondere mit beiden seiner Innenmantelflächen, einer radial inneren und einer radial äußeren.

Eine Breite des Ringquerschnitts oder Ringabschnitt-Querschnitts ist in einer Weiterbildung zur Strömungs- und Druckverlustoptimierung entlang der Mittelachse oder entlang der Erstreckungsrichtung des Sammelkanals variabel.

In einer Weiterbildung ist ein Abschnitt der Außenmantelfläche in einem Bereich zwischen der ersten und zweiten Steuergeometrie hin zur Mittelachse radial verjüngt, das heißt nach radial innen eingeschnürt. Diese Form resultiert in einer strömungsoptimierten Druckmittelverbindung über die Steuergeometrie oder in strömungsoptimierten Druckmittelverbindungen über die Steuergeometrien.

In einer Weiterbildung weist wenigstens eine Minderzahl der Mündungen eine Richtungskomponente in Richtung der Mittelachse, insbesondere in Hubrichtung, oder entgegen dieser Richtung auf. Dadurch ist ein Strömungsein- und/oder -auslauf in den Durchgang hinein oder aus dem Durchgang heraus optimiert.

Die Mündungen weisen in dem Ventilkolben hinein.

In einer Weiterbildung weisen die diesseits der ersten Steuergeometrie angeordneten Mündungen hin zu den jenseits der zweiten Steuergeometrie angeordneten Mündungen. Ergänzend oder alternativ weisen letztgenannte hin zu erstgenannten Mündungen.

In anderen Worten erfolgt der Ein- und/oder der Auslauf bezogen auf die Außenmantelfläche zumindest im Bereich einer Gruppe der Mündungen flach, und nicht senkrecht zu dieser, so dass die Umlenkung der Strömung innerhalb des Durchgangs zumindest dort sanft ausgebildet ist.

In einer gewichtssparenden oder zumindest fertigungsenergiesparenden Weiterbildung weist der Ventilkolben wenigstens einen zusätzlichen, zumindest abschnittsweise additiv gefertigten Hohlraum auf. Dieser ist entweder leer, enthält also keinerlei Material mehr, oder er ist mit losem, nicht additiv gefügtem Material gefüllt. Im letzten Fall entfällt die Gewichtsersparnis, jedoch liegt die angesprochene Energieersparnis vor, da das Material nicht erhitzt und aufgeschmolzen werden musste. In jedem Fall ist über den Hohlraum ein additives Bauvolumen reduziert.

Der genannte Hohlraum erstreckt sich in einer Weiterbildung zumindest entlang eines Abschnitts der Mittelachse, sowie um diese herum, also mittig im Ventilkolben. Der Hohlraum kann, wie der Ventilkolben generell selbst auch, in einer Weiterbildung als Rotationsvolumen um seine Mittelsachse ausgebildet sein, sodass Wandstärken des Ventilkolbens konstant sind und deren Stabilität räumlich homogen ist.

In einer Weiterbildung durchsetzt der Hohlraum den Ventilkolben entlang seiner Mittelachse, insbesondere zumindest im Bereich zwischen den bezogen auf die Hubrichtung des Ventilkolbens jeweils äußersten Steuergeometrien des Ventilkolbens. Dann ist die genannte Gewichts- und/oder Energieersparnis besonders groß.

Um die Stabilität des Durchgangs zu erhöhen, erstreckt sich der Hohlraum entlang einem anderen Abschnitt der Mittelachse als der Mittelabschnitt des Durchgangs. Dadurch ist der Durchgang hin zur Mittelachse nach wie vor durch Material gestützt und dadurch stabiler. Die Erstreckungsabschnitte des Hohlraums und des Mittelabschnitts können dabei eine Überdeckung aufweisen.

In einer Weiterbildung weist der Ventilkolben, insbesondere außenumfänglich oder an einer axialen Stirnfläche, eine Auslassausnehmung oder -öffnung, insbesondere in Form eines Kanals auf. Über diese oder diesen ist nicht addiertes, also loses Material nach beendeter additiver Fertigung, aus dem Hohlraum entfernt oder entfernbar.

Die Auslassausnehmung ist in einer Weiterbildung offen, sie kann alternativ jedoch verschlossen sein. Die Auslassöffnung ist insbesondere durch das zuvor genannte Halbzeug verschlossen.

In einer Weiterbildung hat der Ventilkolben einen, bezogen auf eine Längserstreckung des Ventilkolbens, mittleren Steuerbund, oder alternativ eine mittlere radiale Verjüngung, der oder die sich beidseitig der Mittelebene erstreckt. Deren Normale ist die Mittelachse, die in Längserstreckung verläuft. Dabei ist beidseitig des mittleren Steuerbundes, oder der mittleren radialen Verjüngung, jeweils ein Satz, zumindest bestehend aus der genannten ersten und zweiten Steuergeometrie, sowie dem genannten wenigstens einen Durchgang, ausgebildet. Hierdurch ist insbesondere der Ventilkolben für ein stetig verstellbares 4/3-Wege- oder 4/3-Wege-Schaltventil ausbildbar oder ausgebildet.

In einer Weiterbildung ist die Mittelebene eine Symmetrieebene, so dass die beiden Sätze symmetrisch zu dieser angeordnet und/oder ausgebildet sind.

In einer alternativen Weiterbildung ist der Ventilkolben, insbesondere mit Bezug zu einer Mittelebene, deren Normale die in Längserstreckung verlaufende Mittelachse ist, unsymmetrisch.

Ein Ventil, insbesondere ein Schieberventil, insbesondere Wegeventil, in Axialschieber- oder Drehschieberbauweise, hat ein Ventilgehäuse mit einer Gehäuseausnehmung mit einer Mittelachse, in der ein Ventilkolben gemäß wenigstens einem Aspekt der vorhergehenden Beschreibung mit seiner fluchtenden Mittelachse verstellbar aufgenommen ist. Im Falle des Axialschiebers ist die Verstellung dabei axial, im Falle des Drehschiebers ist die Verstellung über Rotation des Ventilkolbens gegeben. Dabei sind korrespondierend mit den bereits genannten Steuergeometrien des Ventilkolbens an der Gehäuseausnehmung entlang der Mittelachse wenigstens zwei zueinander beabstandete Steuergeometrien vorgesehen. Diesseits einer ersten der Steuergeometrien der Gehäuseausnehmung ist dabei ein erster Druckraum, jenseits einer zweiten der Steuergeometrien der Gehäuseausnehmung ein zweiter Druckraum und zwischen den beiden Steuergeometrien der Gehäuseausnehmung ein dritter Druckraum im Ventilgehäuse ausgebildet. Dabei ist zumindest in einer Stellung des Ventilkolbens der erste Druckraum mit dem zweiten Druckraum unter Umgehung der Steuergeometrien und des dritten Druckraumes über den Durchgang fluidisch verbunden. Vorzugsweise ist dies eine Neutralstellung.

In einer Weiterbildung des Ventils ist der erste Druckraum mit einer Druckmittelquelle, insbesondere einem Hochdruckraum, der zweite Druckraum mit einer Druckmittelsenke, insbesondere einem Niederdruck- oder Tankraum, verbunden oder verbindbar. Der dritte Druckraum ist insbesondere mit einem Arbeitsanschluss des Ventils verbunden oder verbindbar.

In einer bevorzugten Weiterbildung ist das Ventil bezüglich der vorgenannten Symmetrieebene mit Bezug zu den Steuergeometrien und Druckräumen des Ventilgehäuses symmetrisch ausgebildet.

Mehrere Ausführungsbeispiele eines erfindungsgemäßen Ventils und eines erfindungsgemäßen Ventilkolbens sind in den Zeichnungen dargestellt. Anhand der Figuren dieser Zeichnungen wird die Erfindung nun näher erläutert.

Es zeigen:
Figur 1a und Figur 1b eine jeweilige Schaltlogik eines erfindungsgemäßen Ventils,
Figur 2 ein erfindungsgemäßes Ventil in einem Längsschnitt gemäß einem ersten Ausführungsbeispiel,
Figur 3 einen erfindungsgemäßen Ventilkörper in einem Längsschnitt gemäß einem zweiten Ausführungsbeispiel, und
Figur 4 einen erfindungsgemäßen Ventilkörper in einem Längsschnitt gemäß einem dritten Ausführungsbeispiel.

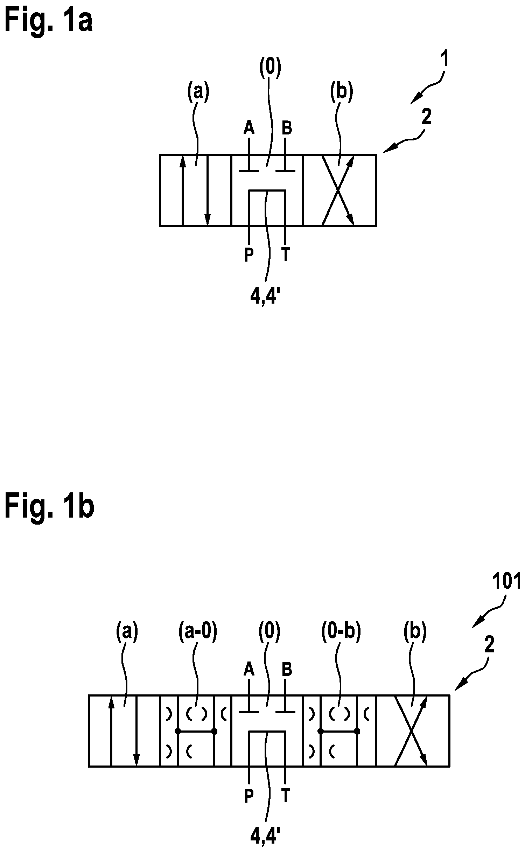

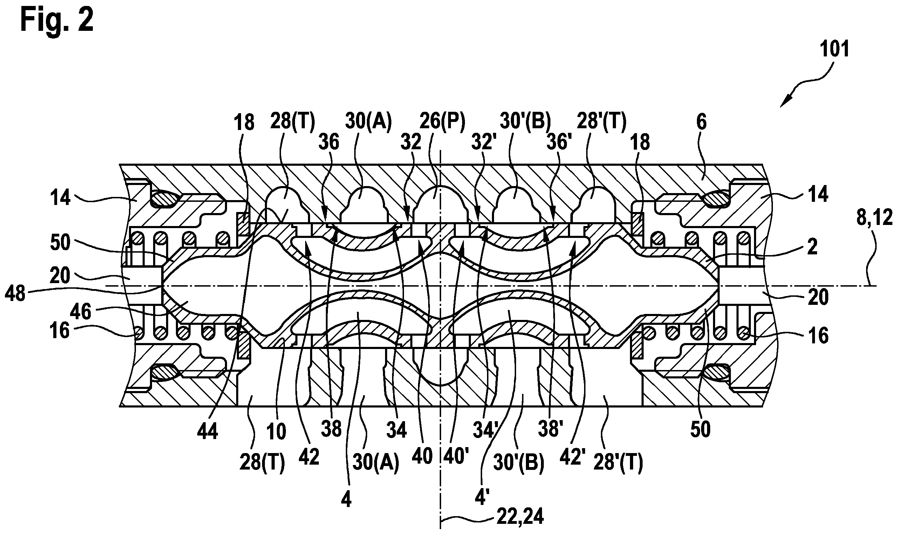

Figuren 1a und 1b zeigen zwei Ausführungsbeispiele eines 4/3-Wegeventils 1; 101. Das Ventil gemäß Figur 1a ist als Schaltventil ausgestaltet und hat drei Stellungen 0, a, b. Des Weiteren hat es vier Anschlüsse, einen Druckanschluss P zur Verbindung mit einer Druckmittelquelle, beispielsweise einer Hydropumpe, einen Niederdruckanschluss T zur Verbindung mit einer Druckmittelsenke, insbesondere einem Tank, einen ersten Arbeitsanschluss A, sowie einen zweiten Arbeitsanschluss B, jeweils zur Verbindung mit einem hydrostatischen Verbraucher oder Aktor. In der ersten Stellung a ist der Druckanschluss P mit dem ersten Arbeitsanschluss A und der zweite Arbeitsanschluss Bist mit dem Niederdruckanschluss T verbunden. In der zweiten Stellung b ist der erste Arbeitsanschluss A mit dem Niederdruckanschluss T und der Hochdruckanschluss P ist mit dem zweiten Arbeitsanschluss B verbunden. In der Zentral- oder Neutralstellung 0 ist der Hochdruckanschluss P über einen innerhalb eines Ventilkolbens 2 ausgebildeten Durchgang 4, 4' mit dem Niederdruckanschluss T druckmittelverbunden. Die Druckmittelverbindung erfolgt dabei unter Umgehung von Steuergeometrien des Ventilkolbens 2 und Ventilgehäuses, was anhand der Figuren 2 bis 4 näher erläutert wird.

Das Ventil 1 gemäß Figur 1a ist, wie bereits erwähnt, als Schaltventil ausgeführt, es weißt also lediglich die genannten drei Schaltstellungen a, 0, b auf. Die Betätigung, oder besser gesagt Zentrierung, in die Zentralstellung 0 erfolgt über (nicht dargestellte) beidseitig des Ventilkolbens 2 angeordnete Zentrierfedern. Die Betätigung in die jeweilige Stellungen a, b erfolgt jeweils über (nicht dargestellte) Elektromagnete. Dabei kann natürlich eine abweichende Betätigungsart, beispielsweise hydraulisch oder pneumatisch, vorgesehen sein.

Das Ventil 101 gemäß Figur 1b unterscheidet sich vom ersten Ausführungsbeispiel gemäß Figur 1a darin, dass es stetig verstellbar ist und somit zwischen den Stellungen a, 0, b die Drosselstellungen a-0 und 0-b aufweist. Ansonsten ist die Schaltlogik des Ventils 101, die Anschlüsse P, T, A, B, die Stellungen a, b, sowie den Ventilkolben 2 und den Durchgang 4 betreffend, gleich. Die stetige Verstellbarkeit ermöglicht die Zwischenstellungen a-0 und 0-b.

Figur 2 zeigt das Ventil 101 gemäß Figur 1b mit einem ersten Ausführungsbeispiel eines erfindungsgemäßen Ventilkolbens 2. Das Ventil 101 hat ein Ventilgehäuse 6 in dem entlang einer Mittel- oder Bohrungsachse 8 eine Durchgangsausnehmung 10 vorgesehen ist. In der Durchgangsausnehmung 10 ist der Ventilkolben 2 entlang seiner mit der Mittelachse 8 fluchtenden Mittelachse 12 axial verschieblich aufgenommen. Die Durchgangsausnehmung 10 ist beidseitig an ihren Endabschnitten über eine Verschlussschraube 14 verschlossen und gegen Atmosphäre abgedichtet. Die Verschlussschrauben 14 sind jeweils topfförmig ausgebildet und eine Zentrierfeder 16 auf, die an einem Boden der jeweiligen Zentrierschraube 14 abgestützt ist. An ihrem, dem genannten Boden jeweils gegenüberliegenden Endabschnitt, ist die jeweilige Zentrierfeder 16 an einem Federteller 18 abgestützt, der in der in Figur 2 dargestellten Zentralposition 0 an einer jeweiligen konusartigen Stirnfläche des Ventilkolbens 2 anliegt. So ist der Ventilkolben 2 über die Zentrierfedern 16 in der Neutralstellung 0 (vergleiche Fig. 1a und 1b) zentriert. Nicht dargestellt sind jeweilige Elektromagnete des Ventils 101, die über mit dem Ventilkolben 2 endabschnittseitig in Anlage befindliche Betätigungszapfen 20 verstellend auf den Ventilkolben 2 einwirken können.

Das Ventilgehäuse 6 hat im dargestellten Bereich gemäß Figur 2 eine Symmetrieebene 22, mit der eine Symmetrieebene 24 des Ventilkolbens 2 in dessen dargestellter Neutralstellung 0 zusammenfällt. Die Durchgangsausnehmung 10 weist zentral, beidseitig der Symmetrieebene 22, eine radiale Erweiterung in Form eines ersten Druckraumes oder Ringraumes 26 auf, der mit dem Hochdruckanschluss P in konstanter Druckmittelverbindung ist. In Figur 2 links der Symmetrieebene 22, weist die Durchgangsausnehmung 10 einen radial erweiterten zweiten Druckraum 28 auf. Zwischen dem ersten Druckraum 26 und dem zweiten Druckraum 28 weist die Durchgangsausnehmung 10 einen radial erweiterten dritten Druckraum 30 auf. In Figur 2 rechts der Symmetrieebene 22, ist ein zum zweiten Druckraum 28 gespiegelter zweiter Druckraum 28' und ein zum dritten Druckraum 30 gespiegelter dritter Druckraum 30' vorgesehen.

Gemäß Figur 1b und Figur 2 ist der erste Druckraum 26 in permanenter Druckmittelverbindung mit dem Hochdruckanschluss P. Die zweiten Druckräume 28, 28' sind in permanenter Druckmittelverbindung mit dem Niederdruckanschluss T, der dritte Druckraum 30 ist in permanenter Druckmittelverbindung mit dem ersten Arbeitsanschluss A und der dritte Druckraum 30' ist in permanenter Druckmittelverbindung mit dem zweiten Arbeitsanschluss B. Dabei sind die zweiten Druckräume 28, 28' jeweils mit einem Federraum, in dem die Zentrierfeder 16 aufgenommen ist, verbunden, sodass an Endabschnitten des Ventilkolbens 2 immer der Nieder- oder Tankdruck ansteht.

Gemäß Figur 2 hat der Ventilkolben 2 links der Symmetrieebene 22 eine erste Steuergeometrie 32 in Form eines Radialbundabschnittes, der oder die in umfänglicher Anlage mit einer ersten Steuergeometrie 34 des Ventilgehäuses 6 ist oder bringbar ist. Dazu beabstandet, gemäß Figur 2 weiter links, hat der Ventilkolben 2 eine zweite Steuergeometrie 36 in Form eines Radialbundes, der oder die in Anlage mit einer zweiten Steuergeometrie 38 des Ventilgehäuses 6 ist. Zwischen den ersten Steuergeometrien 34 und 38 des Ventilgehäuses 6 erstreckt sich der dritte Druckraum 30. Ausgehend von der Symmetrieebene 22 diesseits der ersten Steuergeometrie 34 des Ventilgehäuses 6 erstreckt sich der erste Druckraum 26, jenseits der zweiten Steuergeometrie 38 des Ventilgehäuses erstreckt sich der zweite Druckraum 28. Den ersten Steuergeometrien 32, 34, zweiten Steuergeometrien 36, 38 und dem zweiten Druckraum 28 und dritten Druckraum 30 entsprechend, sind rechts der Symmetrieebene 22 erste Steuergeometrien 32', 34', zweite Steuergeometrien 36', 38' und der zweite Druckraum 28' und dritte Druckraum 30' vorgesehen.

Über den von den ersten Steuergeometrien 32, 34 gebildeten Drosselquerschnitt zwischen dem Ventilkolben 2 und dem Ventilgehäuse 6 kann über das Verschieben/Verstellen des Ventilkobens 2 in die Endstellung a oder in die Stellung a-0 gemäß Figur 1b der Hochdruckanschluss P mit dem ersten Arbeitsanschluss A druckmittelverbunden werden. In den Zwischenstellungen a-0 gemäß Figur 1b ist dabei die gedrosselte Druckmittelverbindung aller Arbeitsanschlüsse P, T, A, B gegeben.

Durch Verstellen des Ventilkolbens 2 in Figur 2 nach links kann die Stellung b oder können die Stellungen 0-b gemäß Figur 1b eingenommen werden.

Der Ventilkolben 2 ist komplett additiv, einstückig gefertigt. Er weist beidseitig seiner Symmetrieebene 24 einen jeweiligen, erfindungsgemäß geformten Durchgang 4, 4' auf. In der gemäß Figur 2 dargestellten Neutralstellung 0 ist über den Durchgang 4 der erste Druckraum 26 mit dem zweiten Druckraum 28 und über den Durchgang 4' der erste Druckraum 26 mit dem zweiten Druckraum 28' druckmittelverbunden. Die Druckmittelverbindung erfolgt dabei jeweils unter Umgehung der Steuergeometrien 32 bis 38, sowie 32' bis 38'.

Die Durchgänge 4, 4' weisen dabei eine hin zur Mittelachse 12 des Ventilkolbens 2 gewölbte oder bauchige Form auf und sind hin zur Mittelachse 12 begrenzt. Anders als im Stand der Technik ist somit kein mittiger Durchgang, ohne radial innere Innenmantelfläche, ausgebildet. Durch die topologische Begrenzung hin zur Mittelachse 12 kann der jeweilige Durchgang 4, 4' noch besser optimiert werden, sodass die jeweilige Druckmittelströmung vom ersten Druckraum 26 hin zu den zweiten Druckräumen 28, 28' definierter führbar ist. Dadurch kann der Druckverlust reduziert werden.

Gemäß Figur 2 ist dies so umgesetzt, dass die Durchgänge 4, 4' hin zur Mittelachse 12 gewölbt oder bauchig ausgestaltet sind. Dadurch erfährt die Druckmittelströmung im jeweiligen Durchgang 4, 4' keine scharfe oder abrupte Umlenkung und es besteht kein großer Totraum mehr, sodass darauf basierende Turbulenzen mit resultierendem Druckverlust zumindest verringert bis hin zu ausgeschlossen sind.

Der Durchgang 4, 4' weist, jeweils ausgehend von der Symmetrieebene 24, diesseits der ersten Steuergeometrie 32, 32' eine erste Gruppe umfänglich gleich verteilter Mündungen 40, 40' und jenseits der zweiten Steuergeometrie 36, 36' eine zweite Gruppe umfänglich gleich verteilter Mündungen 42, 42' auf. Die Mündungen 40, 42, 40', 42' sind senkrecht zu einer Außenmantelfläche 44 des Ventilkolbens 2 ausgerichtet, welche auch die ersten und zweiten Steuergeometrien 32, 36, 32', 36' des Ventilkolbens trägt. Die Außenmantelfläche 44 ist in einem Bereich zwischen den ersten 32, 32' und zweiten Steuergeometrien 36, 36' radial verjüngt, also ebenso wie der Durchgang 4, 4' hin zur Mittelachse 12 des Ventilkolbens 2 bauchig eingewölbt. Hierdurch ist eine Druckmittelströmung vom ersten Druckraum 26 jeweils zum dritten Druckraum 30 und 30', sowie zwischen dem dritten 30 und zweiten Druckraum 28, beziehungsweise 30' und 28', strömungsoptimiert.

Zu einer Verringerung des Gewichts des Ventilkolbens 2 trägt ein, ebenso additiv gefertigter, entlang der Mittelachse 8 durchgängiger Hohlraum 46 bei. Dieser ist als Rotationskörper um die Mittelachse 12 des Ventilkolbens 2 ausgestaltet. Dabei weist er stirnseitig, an in Richtung der Mittelachse 8 befindlichen Endabschnitten des Ventilkolbens 2, eine jeweilige Auslassausnehmung 48 auf, über die im Anschluss an die Fertigung im Hohlraum 46 befindliches, nicht additiv gefügtes Material entnommen ist. Im Betrieb des Ventilkolbens 2 ist die Ausnehmung 48 vom daran anliegenden Betätigungszapfen 20 der Elektromagnete (nicht dargestellt) verschlossen.

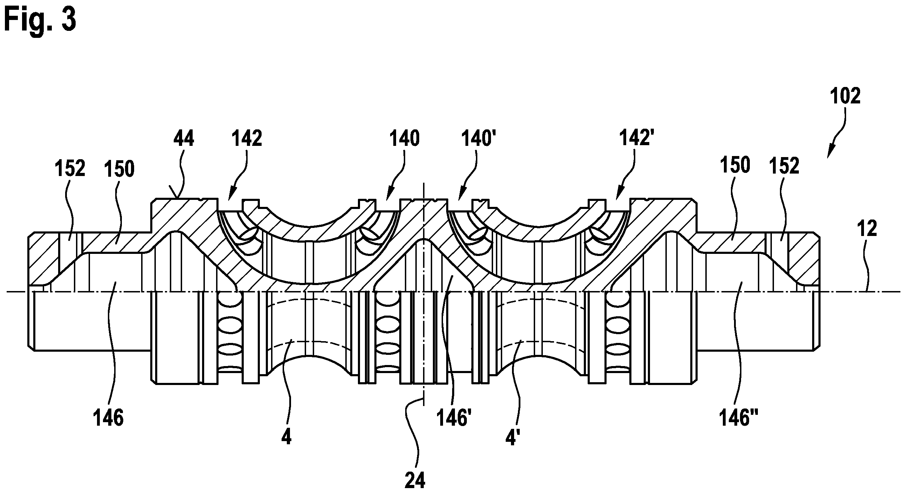

Figur 3 zeigt ein zweites Ausführungsbeispiel eines Ventilkolbens 102, der alternativ zum Ventilkolben 2 im Ventil 1 oder 101 verwendbar ist. Er weist gegenüber dem Ventilkolben 2 gemäß Figur 2 einige Veränderungen auf, auf die zunächst eingegangen werden soll. Sein Hohlraum 146, 146', 146" erstreckt sich nicht durchgängig entlang der Mittelachse 12, sondern ist, anders als beim Ventilkolben 2, dreiteilig ausgebildet. Dabei ist er im Bereich des jeweiligen Durchgangs 4, 4' unterbrochen. Die Durchgänge 4, 4' sind dadurch im Bereich ihres Mittelabschnitts hin zur Mittelachse 12 durch Vollmaterial gestützt und weisen eine erhöhte Festigkeit auf.

Eine Verbesserung hinsichtlich des Strömungs- und Druckverlustverhaltens der Durchgänge 4, 4' ist beim Ventilkolben 102 gemäß Figur 3 dadurch realisiert, dass Mündungen 140, 142, 140', 142' - anstatt wie beim Ventilkoben 2 gemäß Figur 2 radial oder senkrecht zur Außenmantelfläche 44 - zur Außenmantelfläche 44 abgeflacht ein- und auslaufen. Dadurch entsteht im Bereich der Mündungen 140, 142, 140', 142' noch weniger Verwirbelung, was den Druckverlust senkt.

Der im Ausführungsbeispiel gemäß Figur 3 dreiteilige Hohlraum 146, 146', 146" hat einen in sich geschlossenen Mittelabschnitt 146' und zwei zur Symmetrieebene 24 symmetrische Außenabschnitte 146, 146", im Bereich des jeweiligen Federzapfens 150. Diese weisen jeweils eine Radialbohrung 152 auf, über die das nicht additiv gefügte, lose Material aus den Außenabschnitten 146, 146"entfernt ist. Der Federzapfen 150 gemäß Figur 3 ist, anders als der Federzapfen 150 gemäß Figur 2, im Wesentlichen zylindrisch mit einer kleineren, stirnseitigen Fase ausgebildet. Der Federzapfen 50 gemäß Figur 2 hat demgegenüber eine große, stirnseitige Fase.

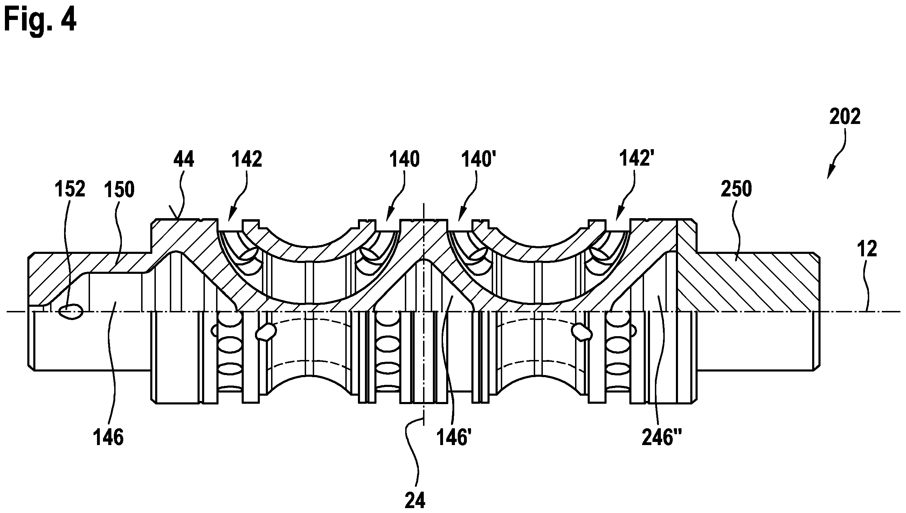

Ein Ventilkolben 202 gemäß Figur 4 entspricht im Wesentlichen demjenigen gemäß Figur 3, weshalb gleichbleibende Komponenten und Geometrien mit den gleichleibenden Bezugszeichen versehen sind. Abweichend vom Ausführungsbeispiel gemäß Figur 3 ist ein Federzapfen 250 in Vollmaterial als Halbzeug mit dem restlichen Ventilkolben 202 additiv gefügt verbunden. Dementsprechend ist ein dort lokalisierter Außenabschnitt 246" des Hohlraumes in Richtung der Mittelachse 12 verkürzt.

Offenbart ist ein Ventilkolben für ein Ventil, der eine innenliegenden, zumindest abschnittsweise additiv gefertigten Durchgang mit am Ventilkolben außenumfänglichen Mündungen hat. Dabei ist der Durchgang derart strömungsoptimiert geformt, dass er sich entlang der Mittelachse erstreckt und sein Mittelabschnitt hin zur Mittelachse gewölbt ist
Offenbart ist weiterhin ein Ventil mit einem Ventilgehäuse und einer Gehäuseausnehmung, in der dieser Ventilkolben relativ zum Ventilgehäuse verstellbar aufgenommen ist.

## Patentansprüche

1. Ventilkolben mit einer Mittelachse (12) entlang der, insbesondere zur Steuerung einer Druckmittelverbindung, zueinander beabstandete Steuergeometrien (32, 36, 32', 36') vorgesehen sind, die von einem den Ventilkolben (2; 102; 202) durchsetzenden, zumindest abschnittsweise additiv gefertigten, von Druckmittel durchströmbaren Durchgang (4, 4') umgangen sind, wobei der Durchgang (4, 4') zur Mittelachse (12) hin begrenzt ist, **dadurch gekennzeichnet, dass** der Ventilkolben eine Außenmantelfläche (44) aufweist, in der diesseits einer ersten (32, 32') und jenseits einer zweiten (36, 36') der Steuergeometrien (32, 36, 32', 36') Mündungen (40, 42, 40', 42'; 140, 142, 140', 142') des Durchgangs (4, 4') vorgesehen sind.

2. Ventilkolben nach Anspruch 1, der mit wenigstens einem eingelegten Halbzeug oder Einlegeteil additiv gefertigt ist.

3. Ventilkolben nach Anspruch 1 oder 2, wobei der Durchgang (4, 4') zumindest einen Abschnitt hat, der sich hin zur Mittelachse (12) bauchig oder mit bauchiger Form erstreckt.

4. Ventilkolben nach Anspruch 3, wobei der Abschnitt in Hubrichtung des Ventilkolbens (2; 102; 202) ein Mittelabschnitt des Durchgangs (4, 4') ist.

5. Ventilkolben nach einem der vorhergehenden Ansprüche, wobei der Durchgang eine Schar Druckmittelkanäle aufweist.

6. Ventilkolben nach einem der vorhergehenden Ansprüche, wobei der Durchgang (4, 4') einen Sammelkanal mit einem Ringquerschnitt oder mit einem Ringabschnittsquerschnitt aufweist.

7. Ventilkolben nach einem der vorhergehenden Ansprüche, wobei die Mündungen (40, 42, 40', 42'; 140, 142, 140', 142') in den Ventilkolben (2; 102; 202) weisen, und die diesseits der ersten Steuergeometrie (32, 32') angeordneten Mündungen (140, 140') hin zu den jenseits der zweiten Steuergeometrie (36, 36') angeordneten Mündungen (142, 142') weisen, oder/und umgekehrt.

8. Ventilkolben nach einem der vorhergehenden Ansprüche mit wenigstens einem zusätzlichen, zumindest abschnittsweise additiv gefertigten Hohlraum (46; 146, 146', 146"; 246").

9. Ventilkolben nach Anspruch 8, wobei sich der wenigstens eine Hohlraum (46; 146, 146', 146"; 246") zumindest entlang eines Abschnitts der Mittelachse (12) und um diesen herum erstreckt.

10. Ventilkolben nach Anspruch 4 und nach Anspruch 8 oder 9, wobei sich der Hohlraum (146, 146', 146"; 246") entlang einem anderen Abschnitt der Mittelachse (12) erstreckt als der Mittelabschnitt.

11. Ventilkolben nach einem der Ansprüche 8 bis 10, wobei der wenigstens eine Hohlraum wenigstens eine, insbesondere außenumfänglich oder an einer axialen Stirnfläche angeordnete, Auslassöffnung (48; 152) hat, oder wobei er geschlossen ist.

12. Ventilkolben nach einem der vorhergehenden Ansprüche, mit einem mittleren Steuerbund, der sich beidseitig einer Mittelebene (24) erstreckt, deren Normale die Mittelachse (12) ist, wobei beidseitig des mittleren Steuerbundes jeweils ein Satz zumindest bestehend aus der ersten und zweiten Steuergeometrie (32, 36, 32', 36'), sowie dem wenigstens einen Durchgang (4, 4') ausgebildet ist.

13. Ventil mit einem Ventilgehäuse (6) mit einer Gehäuseausnehmung (10) mit einer Mittelachse (8), in der ein Ventilkolben (2) gemäß einem der vorhergehenden Ansprüche mit fluchtender Mittelachse (12) verstellbar aufgenommen ist, wobei an der Gehäuseausnehmung (10) entlang der Mittelachse (8) wenigstens zwei zueinander beabstandete Steuergeometrien (34, 38, 34', 38') vorgesehen sind, die jeweils einer der Steuergeometrien (32, 36, 32', 36') des Ventilkolbens (2) zugeordnet sind, wobei diesseits einer ersten (34, 34') der Steuergeometrien (34, 38, 34', 38') der Gehäuseausnehmung (10) ein erster Druckraum (26), jenseits einer zweiten (38, 38') der Steuergeometrien (34, 38, 34', 38') der Gehäuseausnehmung (10) ein zweiter Druckraum (28, 28') und zwischen den beiden Steuergeometrien (34, 34', 38, 38') der Gehäuseausnehmung (10) ein dritter Druckraum (30, 30') im Ventilgehäuse (10) ausgebildet ist, wobei in zumindest einer Stellung (0, a-0, 0-b) des Ventilkolbens (2) der erste Druckraum (26) mit dem zweiten Druckraum (28, 28') unter Umgehung der Steuergeometrien (32, 34, 36, 38, 32', 34', 36', 38') über den Durchgang (4, 4') fluidisch verbunden ist.

14. Ventil nach Anspruch 13, wobei der erste Druckraum (26) mit einer Druckmittelquelle (P), insbesondere einem Hochdruckraum, und der zweite Druckraum (28, 28') mit einer Druckmittelsenke (T), insbesondere einem Niederdruck- oder Tankdruckraum, verbunden oder verbindbar ist, wobei der dritte Druckraum (28, 28') mit einem Arbeitsanschluss (A, B) des Ventils (1; 101) verbunden oder verbindbar ist.

## Claims

1. Valve piston having a central axis (12) along which mutually spaced control geometries (32, 36, 32', 36') are provided, in particular for controlling a hydraulic fluid connection, which are bypassed by a passage (4, 4') which extends through the valve piston (2; 102; 202), which is at least in portions additively manufactured and through which hydraulic fluid is able to flow, wherein the passage (4, 4') is delimited towards the central axis (12), **characterized in that** the valve piston has an outer circumferential surface (44) in which orifices (40, 42, 40', 42'; 140, 142, 140', 142') of the passage (4, 4') are provided on the one side of a first (32, 32') and on the other side of a second (36, 36') of the control geometries (32, 36, 32', 36').

2. Valve piston according to Claim 1, which is additively manufactured with at least one inserted semifinished product or insert.

3. Valve piston according to Claim 1 or 2, wherein the passage (4, 4') has at least one portion which is bellied or extends with a convex shape towards the central axis (12) .

4. Valve piston according to Claim 3, wherein the portion in the stroke direction of the valve piston (2; 102; 202) is a central portion of the passage (4, 4').

5. Valve piston according to one of the preceding claims, wherein the passage comprises a system of hydraulic fluid ducts.

6. Valve piston according to one of the preceding claims, wherein the passage (4, 4') comprises a collecting duct having an annular cross section or an annular sectorial cross section.

7. Valve piston according to one of the preceding claims, wherein the orifices (40, 42, 40', 42'; 140, 142, 140', 142') point into the valve piston (2; 102; 202), and the orifices (140, 140') arranged on the one side of the first control geometry (32, 32') point towards the orifices (142, 142') arranged on the other side of the second control geometry (36, 36') or/and vice versa.

8. Valve piston according to one of the preceding claims, having at least one additional cavity (46; 146, 146', 146"; 246") that at least in portions is additively manufactured.

9. Valve piston according to Claim 8, wherein the at least one cavity (46; 146, 146', 146"; 246") extends at least along a portion of the central axis (12) and around the latter.

10. Valve piston according to Claim 4 and according to Claim 8 or 9, wherein the cavity (146, 146', 146"; 246") extends along a portion of the central axis (12) other than the central portion.

11. Valve piston according to one of Claims 8 to 10, wherein the at least one cavity has at least one outlet opening (48; 152) arranged in particular on the external circumference or at an axial end face, or wherein said cavity is closed.

12. Valve piston according to one of the preceding claims, having a central control flange which extends on both sides of a central plane (24), the normal of which is the central axis (12), wherein a series, comprising at least the first and second control geometry (32, 36, 32', 36') and the at least one passage (4, 4'), is formed on either side of the central control flange respectively.

13. Valve having a valve housing (6) with a housing recess (10) having a central axis (8), in which a valve piston (2) according to one of the preceding claims with aligning central axis (12) is adjustably received, wherein at least two mutually spaced control geometries (34, 38, 34', 38'), which are each assigned to one of the control geometries (32, 36, 32', 36') of the valve piston (2), are provided on the housing recess (10) along the central axis (8), wherein a first pressure chamber (26) is formed on the one side of a first (34, 34') of the control geometries (34, 38, 34', 38') of the housing recess (10), a second pressure chamber (28, 28') on the other side of a second (38, 38') of the control geometries (34, 38, 34', 38') of the housing recess (10), and a third pressure chamber (30, 30') in the valve housing (10) between the two control geometries (34, 34', 38, 38') of the housing recess (10), wherein in at least one position (0, a-0, 0-b) of the valve piston (2) the first pressure chamber (26) has a fluid connection to the second pressure chamber (28, 28') via the passage (4, 4'), bypassing the control geometries (32, 34, 36, 38, 32', 34', 36', 38').

14. Valve according to Claim 13, wherein the first pressure chamber (26) is or is able to be connected to a hydraulic fluid source (P), in particular a high-pressure chamber, and the second pressure chamber (28, 28') to a hydraulic fluid sink (T), in particular a low-pressure chamber or tank pressure chamber, wherein the third pressure chamber (28, 28') is or is able to be connected to a working connection (A, B) of the valve (1; 101).

## Revendications

1. Piston de soupape avec un axe central (12) le long duquel sont prévues, notamment pour la commande d'une liaison de fluide sous pression, des géométries de commande (32, 36, 32', 36') espacées les unes des autres, qui sont contournées par un passage (4, 4') traversant le piston de soupape (2 ; 102 ; 202), fabriqué de manière additive au moins par sections, pouvant être traversé par un fluide sous pression, le passage (4, 4') étant limité vers l'axe central (12), **caractérisé en ce que** le piston de soupape présente une surface d'enveloppe extérieure (44) dans laquelle des embouchures (40, 42, 40', 42' ; 140 ,142, 140', 142') du passage (4, 4') sont prévues d'un côté d'une première (32, 32') et d'un autre côté d'une deuxième (36, 36') des géométries de commande (32, 36, 32', 36').

2. Piston de soupape selon la revendication 1, qui est fabriqué de manière additive avec au moins un produit semi-fini ou une pièce d'insertion inséré.

3. Piston de soupape selon la revendication 1 ou 2, dans lequel le passage (4, 4') a au moins une section qui s'étend vers l'axe central (12) de manière bombée ou sous une forme bombée.

4. Piston de soupape selon la revendication 3, dans lequel la section dans la direction de la course du piston de soupape (2 ; 102 ; 202) est une section centrale du passage (4, 4').

5. Piston de soupape selon l'une quelconque des revendications précédentes, dans lequel le passage présente un ensemble de canaux de fluide sous pression.

6. Piston de soupape selon l'une quelconque des revendications précédentes, dans lequel le passage (4, 4') présente un canal collecteur avec une section transversale annulaire ou avec une section transversale à section annulaire.

7. Piston de soupape selon l'une quelconque des revendications précédentes, dans lequel les embouchures (40, 42, 40', 42' ; 140, 142, 140', 142') sont dirigées dans le piston de soupape (2 ; 102 ; 202), et les embouchures (140, 140') agencées d'un côté de la première géométrie de commande (32, 32') sont dirigées vers les embouchures (142, 142') agencées d'un autre côté de la deuxième géométrie de commande (36, 36'), ou/et inversement.

8. Piston de soupape selon l'une quelconque des revendications précédentes, avec au moins une cavité supplémentaire (46 ; 146, 146', 146" ; 246") fabriquée de manière additive au moins par sections.

9. Piston de soupape selon la revendication 8, dans lequel l'au moins une cavité (46 ; 146, 146', 146" ; 246") s'étend au moins le long d'une section de l'axe central (12) et autour de celui-ci.

10. Piston de soupape selon la revendication 4 et selon la revendication 8 ou 9, dans lequel la cavité (146, 146', 146" ; 246") s'étend le long d'une section de l'axe central (12) autre que la section centrale.

11. Piston de soupape selon l'une quelconque des revendications 8 à 10, dans lequel l'au moins une cavité a au moins une ouverture de sortie (48 ; 152), notamment agencée sur la périphérie extérieure ou sur une surface d'extrémité axiale, ou dans lequel il est fermé.

12. Piston de soupape selon l'une quelconque des revendications précédentes, avec une collerette de commande centrale s'étendant de part et d'autre d'un plan central (24) dont la normale est l'axe central (12), un ensemble constitué au moins de la première et de la deuxième géométrie de commande (32, 36, 32', 36'), ainsi que de l'au moins un passage (4, 4') étant formé de part et d'autre de la collerette de commande centrale.

13. Soupape avec un boîtier de soupape (6) avec un évidement de boîtier (10) avec un axe central (8), dans lequel un piston de soupape (2) selon l'une quelconque des revendications précédentes est reçu de manière réglable avec l'axe central (12) aligné, au moins deux géométries de commande (34, 38, 34', 38') espacées l'une de l'autre étant prévues sur l'évidement de boîtier (10) le long de l'axe central (8), qui sont associées chacune à l'une des géométries de commande (32, 36, 32', 36') du piston de soupape (2), une première chambre de pression (26) étant formée d'un côté d'une première (34, 34') des géométries de commande (34, 38, 34', 38') de l'évidement de boîtier (10), une deuxième chambre de pression (28, 28') étant formée de l'autre côté d'une deuxième (38, 38') des géométries de commande (34, 38, 34', 38') de l'évidement de boîtier (10), et une troisième chambre de pression (30, 30') étant formée entre les deux géométries de commande (34, 34', 38, 38') de l'évidement de boîtier (10) dans le boîtier de soupape (10) ; dans au moins une position (0, a-0, 0-b) du piston de soupape (2), la première chambre de pression (26) étant reliée fluidiquement à la deuxième chambre de pression (28, 28') en contournant les géométries de commande (32, 34, 36, 38, 32', 34', 36', 38') via le passage (4, 4').

14. Soupape selon la revendication 13, dans laquelle la première chambre de pression (26) est reliée ou peut être reliée à une source de fluide sous pression (P), notamment une chambre à haute pression, et la deuxième chambre de pression (28, 28') est reliée ou peut être reliée à un puits de fluide sous pression (T), notamment une chambre à basse pression ou une chambre de pression de réservoir, la troisième chambre de pression (28, 28') étant reliée ou pouvant être reliée à un raccord de travail (A, B) de la soupape (1 ; 101).
